# EUROPÄISCHE PATENTSCHRIFT

(11) **EP 1 022 504 B1**
(45) Veröffentlichungstag und Bekanntmachung des Hinweises auf die Patenterteilung: **17.08.2005**
(21) Anmeldenummer: 99810056.4
(22) Anmeldetag: 25.01.1999
(51) Int. Cl.: F16L 47/04, B21D 39/20, B25B 13/50, B25B 13/48, B25B 23/142

(54) **Verschraubbare Rohrverbindung**
Threaded coupling for pipes
Joint fileté pour tuyaux

(43) Veröffentlichungstag der Anmeldung: 26.07.2000
(73) Patentinhaber: JRG Gunzenhauser AG, 4450 Sissach (CH)
(72) Erfinder: Bürli, Kurt, 4463 Buus (CH)
(74) Vertreter: Ullrich, Gerhard, Dr.

(56) Entgegenhaltungen:
- DE-A- 4 141 309
- DE-U- 9 318 442
- US-A- 3 381 982

## Beschreibung

### Anwendungsgebiet der Erfindung

Die Erfindung bezieht sich auf eine verschraubbare Rohrverbindung, insbesondere für Verbundrohre, wo ein aufgeweitetes Rohrende mittels einer Überwurfmutter dichtend gegen einen Fitting verschraubt ist. Die Fittings weisen die gängigen Geometrien, wie T-Stücke, Kreuzstücke, Winkelstücke verschiedener Abwinkelungen, Bögen verschiedener Krümmungen, Muffen und Reduktionsmuffen, auf. Neben Verbundrohren kommen auch alle Rohrmaterialien - z.B. Aluminium, Kupfer, Chromstahl oder Kunststoffe - in Betracht, welche sich kalt oder warm aufweiten lassen und aufgeweitet eine ausreichende Festigkeit besitzen. Das vorrangig geförderte Medium ist Wasser in Wasserversorgungs- oder Heizungsnetzen, aber auch für andere Flüssigkeiten oder Gase ist die Rohrverbindung geeignet.

### Stand der Technik

Aus der DE 38 19 729 A1 ist eine Rohrverbindung bekannt, wo zwischen zwei konisch aufgeweiteten Rohrenden ein mit Dichtlippen versehener Zwischenring eingefügt ist. Äusserlich beider Rohrenden werden die aufgeweiteten Partien von Spannflanschen radial hinterfasst, die axial aufeinander verspannt sind. Durch die zusammen ziehende Verspannung beider Spannflansche schieben sich die Rohrenden partiell auf den Zwischenring, wobei sich die Dichtlippen plastisch verformen. Diese Rohrverbindung ist lediglich für Verlängerungen vorgesehen, d.h. für das Anfügen eines nächsten geraden oder abgebogenen Rohrs, nicht aber für das Einfügen eines Fittings. Überdies geschieht die Abdichtung nur zwischen dem aufgeweiteten Rohrende und Dichtlippen am Zwischenring, also an einer einzigen Stelle. Die Verbindung genügt daher nur sehr beschränkt den vielfältigen, typischen Verbindungsformen in Leitungsnetzen, z.B. lässt sich eine T-Abzweigung nicht herstellen, und die relativ schmale Abdichtfläche dürfte auch nicht allen Anforderungen gerecht werden. Gegenüber einer Rohrverbindung ohne Aufweitung der Rohrenden und mit radialer Verpressung ergibt sich der Vorteil, dass keine Querschnittsverengung mit erhöhtem Strömungswiderstand und Geräuschentwicklung eintritt.

Eine weitere Rohrverbindung ist aus dem Firmenprospekt "TECE*flex* - Das Universal-Installationssystem für Sanitär, Heizung und Sockelleistenheizung", 10.96, der Thermconcept GmbH & Co., Emsdetten/DE, bekannt. Das über einen Abschnitt zylindrisch aufgeweitete Rohrende ist auf den Stutzen eines Fittings, z.B. ein T-Stück, aufgesteckt. Am Stutzen ist eine Aussenprofilierung mit radial umlaufenden Zähnen vorgesehen, die der Abziehrichtung des Rohrs vom Fitting entgegen stehen. Ferner sind am Stutzen eine Anschlagschulter und eine hinter der Schulter liegende Hinterschneidung vorhanden. Nach dem Aufstecken des Rohrendes auf den Stutzen wird mit einer Presszange die vor dem Aufstecken auf das Rohr aufgeschobene Druckhülse über den auf dem Stutzen steckenden aufgeweiteten Rohrabschnitt geschoben. Das aufgeweitete Rohrende ist nun zwischen dem Stutzen und der Druckhülse eingepresst. Für diese Rohrverbindung benötigt man ein Aufweitwerkzeug sowie eine spezielle Presszange. Besonders nachteilig aber ist, dass sich diese Rohrverbindung kaum mehr ohne Zerstörung lösen lässt und bei Belastung der Rohrverbindung auf Zug allein die aufgepresste Druckhülse - abgesehen von der feingezahnten Aussenprofilierung am Stutzen - die wirkenden Längskräfte aufnehmen muss. Die unmittelbare Verbindung eines Fittings mit einem nächsten Fitting - z.B. ein T-Stück und eine darauf folgende Reduktionsmuffe - ist nicht möglich, es muss ein Rohrstück dazwischen eingefügt werden.

In der DE 41 41 309 A1 sind eine verschraubbare Rohrverbindung und ein Aufweitwerkzeug, insbesondere für Verbundrohre, offenbart. Das Rohrende weist als Aufweitung einen konischen Übergang auf, an den sich zur Rohrmündung hin ein zylindrischer Abschnitt anschliesst. Dieses aufgeweitete Rohrende ist auf das komplementär ausgebildete Anschlussteil einer Kupplungshülse aufgeschoben, wobei die Schnittfläche des Rohrendes bei Einfügung eines Dichtungsrings gegen eine ringförmige Anschlagschulter an der Kupplungshülse anstösst. Dem Anschlussteil und der Anschlagschulter vorgelagert besitzt die Kupplungshülse ein im Durchmesser erweitertes Aussengewinde und davor, hin zur Mitte des Anschlussteils, einen Aussensechskant. Vor dem Aufweiten des Rohrendes hat man eine Presshülse, die partiell in einer Überwurfmutter steckt, auf das Rohrende aufgeschoben. Die Überwurfmutter besitzt zum Aussengewinde an der Kupplungshülse vorn ein passendes Innengewinde. Hinten weist die Überwurfmutter eine verengte Mitnehmerschulter auf, die eine Gegenschulter an der Presshülse hintergreift.

Beim Aufschrauben der Überwurfmutter kommt deren Innengewinde mit dem Aussengewinde der Kupplungshülse in Eingriff. Zugleich wird durch Anschlagen der Mitnehmerschulter an der Gegenschulter die vordere Partie der Presshülse, welche gegenüber deren hinterer Partie im Durchmesser erweitert ist, äusserlich radial auf das aufgeweitete Rohrende gezogen. Hierdurch wird das auf dem Anschlussteil steckende, aufgeweitete Rohrende aufgepresst. Das Abziehen des auf dem Anschlussteil steckenden Rohrendes von der Kupplungshülse wird zusätzlich durch die Gegenschulter verhindert, an der sich die Presshülse zu deren hinterer Partie verengt, welche den Normaldurchmesser des Rohrs umgreift. Zwischen der Gegenschulter an der Presshülse und der Mitnehmerschulter an der Überwurfmutter ist ein Gleitring eingefügt, um zu verhindern, dass sich beim Schrauben der Überwurfmutter die Presshülse mitdreht.

Vorteilhaft bei dieser den Strömungsquerschnitt nicht verengenden Rohrverbindung ist, dass sie auf einer Verschraubung beruht, somit keine Presszange erforderlich ist, sich die Verbindung zerstörungsfrei durch Auseinanderschrauben wieder trennen lässt und das vorhandene aufgeweitete Rohrende in einer erneuerten Rohrverbindung wieder benutzt werden kann. Es verbleiben jedoch eine Reihe von Nachteilen. Neben der Kupplungshülse und der Überwurfmutter benötigt man als zusätzliches Teil eine Presshülse, wodurch die Rohrverbindung aufwendiger wird, aber nicht an Festigkeit bzw. Zuverlässigkeit gewinnt. Beim Zusammenschrauben wird die untere Vorderkante der Presshülse unter Anpressdruck auf die Rohroberfläche von der Überwurfmutter auf das aufgeweitete Rohrende gezogen. Eine ähnlich scharfe Kante ergibt sich an der Gegenschulter der Presshülse. Beide Kanten können die Rohroberfläche verletzen, und das aufgeweitete Rohrende wird von der Presshülse nicht breitflächig hintergriffen.

Die Aussensechskanten erlauben das Ansetzen von Schlüsseln nur in Drehstufen von 60°, was bei beengten Raumverhältnissen hinderlich sein kann. Unmittelbar an eine Rohrverbindung anschliessbare Reduktionsmuffen sind nicht vorgesehen. Auch an einer vorgesehenen Möglichkeit der Aufhängung der Leitung zum Abfangen von Längenveränderungen infolge Wärmedehnung fehlt es.

Die DE 93 18 442 U hat einen Kompensator zum Ausgleich von Längenänderungen in einer Rohrleitung zum Gegenstand. Die Längenänderungen entstehen durch Wärmedehnung oder Bewegung der Rohrleitung. Die Enden des zumindest in einem Vollkreis gebogenen Rohrstücks sind zueinander koaxial angeordnet und mit jeweils einer Verschraubung versehen.

In der US 3,381,982 ist die Konstruktion für eine verschraubbare Schlauch- oder Rohrverbindung mit einem Kunststoff-Fitting dargelegt. Auf das Schlauchende wird zuerst eine Überwurfmutter aufgeschoben und danach in das Schlauchende ein Nippel eingesteckt, der mit seiner radialen Verzahnung im Schlauchende festsitzt. Das aus dem Schlauchende herausragende Nippelstück ist im Innendurch- und Aussendurchmesser jeweils grösser als die korrespondierenden Durchmesser des Schlauches, so dass das Nippelstück einen Anschlag für das aufgeschobene Schlauchende darstellt. An das so bestückte Schlauchende wird ein Fitting - z.B. ein T-Stück - mit Aussengewinde angeschoben, auf das sich die Überwurfmutter schrauben lässt, die das herausragende Nippelstück hintergreift. Intern des Fittings kommt das aus dem Schlauchende herausragende Nippelstück zu liegen. Zur Herstellung dieser Verbindung ist jeweils ein in das Schlauchende einzudrückender Nippel erforderlich. Die Verbindung mit dem eingeschobenen Nippel und dem einteiligen Fitting dürfte überdies die für feste Hausinstallationen mit Kalt- und Heisswasser erforderliche Langzeitsicherheit nicht gewährleisten.

### Aufgabe der Erfindung

Angesichts der bestehenden Unvollkommenheiten der existenten Rohrverbindungen des hiesigen Typs liegt der Erfindung die Aufgabe zugrunde, eine verschraubbare Rohrverbindung mit aufgeweitetem Rohrende und ohne Einengung des Strömungsquerschnitts zu schaffen, die mit möglichst wenig Teilen auskommt, eine zuverlässige Dichtheit gewährleistet, sich effizient auch unter engeren Platzverhältnissen montieren lässt und dabei allen konstruktiven Anforderungen beim Aufbau eines Rohrleitungsnetzes gerecht wird. So müssen die verschiedenen Rohrführungen, Abzweigungen und Querschnittsreduktionen realisierbar sein.

### Übersicht über die Erfindung

Die Rohrverbindung ist insbesondere für Verbundrohre mit einer Innen- und einer Aussenbeschichtung aus Kunststoff sowie einer metallischen Mittelschicht konzipiert. Die wesentliche Anwendung sind Warm- und Kaltwasserversorgungsnetze sowie Heizungsanlagen in Gebäuden. Ein aus einem Rohr ausgeformter, radial aufgeweiteter Anschlussabschnitt ist mittels einer Überwurfmutter dichtend mit einem Fitting verschraubt. Der Fitting besteht aus einem mediumführenden Innenteil mit mindestens einer Anschlusspartie und einem Aussenteil mit mindestens einem Aussengewindeabschnitt. Innen- und Aussenteil sind vorzugsweise aus unterschiedlichen Kunststoffmaterialien. Der Anschlussabschnitt des Rohrs ist an eine der Anschlusspartien des Fittings aufgeschoben. Die Überwurfmutter hintergreift den Anschlussabschnitt und dient zur Verschraubung mit einem der Aussengewindeabschnitte am Aussenteil. Das Aussenteil umschliesst das Innenteil, dass allein die Anschlusspartien zugänglich bleiben. Besonders vorteilhaft werden die Fittinge im Zweikomponenten-Spritzverfahren hergestellt, wodurch das Innen- und Aussenteil eine Einheit bilden.

Benachbart zu jedem Aussengewindeabschnitt ist am Aussenteil ein den Fitting radial umlaufender Schlüsselabschnitt für den Eingriff eines Werkzeugschlüssels ausgebildet. Ein Schlüsselabschnitt besteht aus ebenen Flächen und Eingriffsmulden. Nach beiden Seitenrichtungen ist der Aussengewindeabschnitt abgegrenzt. Die Überwurfmutter besteht aus einer vorderen Gewindepartie und einer hinteren Führungspartie, wobei die Gewindepartie den aufgeweiteten Anschlussabschnitt aufnimmt und innerlich einen Innengewindeabschnitt aufweist, der zum Aussengewindeabschnitt am Aussenteil passend ist. Die Führungspartie dient zur Durchführung des hinter dem Anschlussabschnitt folgenden Rohrs. Am Übergang zwischen der Gewindepartie und der Führungspartie ist eine innerliche Konusschulter zum Hinterfassen des aufgeweiteten Anschlussabschnitts vorgesehen. Der Aussenumfang der Überwurfmutter weist querverlaufende Schlüsselrillen zum Eingriff eines Schraubwerkzeugs auf. Die Anschlusspartie besteht aus einer konischen Mündungsfläche - dem Ende des Innenteils -, einer an die Mündungsfläche anschliessenden Ringfläche, einer nachfolgenden Radialnut zur Aufnahme eines Dichtungselements und einer dahinter liegenden Ringfläche.

Zur Kompensation von Wärmedehnungen ist ein an zwei benachbarte Fittings anschliessbares Rohr, welches im Bogen oder Vollkreis geführt ist, vorgesehen. Die beiden Rohrenden weisen jeweils einen aufgeweiteten Anschlussabschnitt und eine zuvor aufgeschobene Überwurfmutter auf.

Ein spezielles Formstück - vorzugsweise als Reduktionsmuffe oder Bogen ausgebildet - ist ohne Zwischenrohr unmittelbar an einen ersten Fitting anschliessbar. Dieses Formstück besteht aus einer Überwurfmutter und einem Innenteil, welches einen aufgeweiteten Anschlussabschnitt und eine Anschlusspartie hat. Die Überwurfmutter weist an einem Ende die Gewindepartie mit dem Innengewindeabschnitt und am anderen Ende die Führungspartie sowie einen dazwischen liegenden Konusabsatz auf. Der Anschlussabschnitt kommt innerhalb der Überwurfmutter zu liegen und wird vom Konusabsatz hintergriffen. Aus der Führungspartie ragt die Anschlusspartie des Innenteils heraus, wobei an der Führungspartie ein Aussengewindeabschnitt vorhanden ist. Der Anschlussabschnitt ist zum Ansetzen an die Anschlusspartie des ersten Fittings bestimmt und der Innengewindeabschnitt wird mit dem Aussengewindeabschnitt des ersten Fittings verschraubt. Die Anschlusspartie des Formstücks ist zum Ansetzen des Anschlussabschnitts eines Rohrs vorgesehen und der Aussengewindeabschnitt der Überwurfmutter des Formstücks wird zum Verschrauben mit einer auf dem Rohr steckenden und den Anschlussabschnitt hintergreifenden Überwurfmutter benutzt. Das Innenteil des Formstücks ist in einer Variante als loses Bauteil in die Überwurfmutter einsteckbar. In der anderen Variante ist die Überwurfmutter im Zweikomponenten-Spritzverfahren auf das Innenteil aufgegossen, wodurch beide Teile eine Einheit bilden.

Zum Aufweiten des Anschlussabschnitts wird z.B. eine hydraulische Aufweitvorrichtung benutzt, die nicht Gegenstand der vorliegenden Erfindung ist.

Die wesentlichen Vorteile der Rohrverbindung sind:
- wieder lösbare Verschraubung ohne Zerstörung des aufgeweiteten Anschlussabschnitts;
- effiziente Serienfertigung der Bauteile und rationelle Montage;
- geringer Strömungswiderstand;
- unmittelbare Anschliessbarkeit eines ersten Fittings mit einem zweiten Fitting, was besonders bei Reduktionen nützlich ist; und
- komfortables Handling mit einer Aufweitvorrichtung und einem Werkzeugschlüsselsatz.

### Kurzbeschreibung der beigefügten Zeichnungen

Es zeigen:

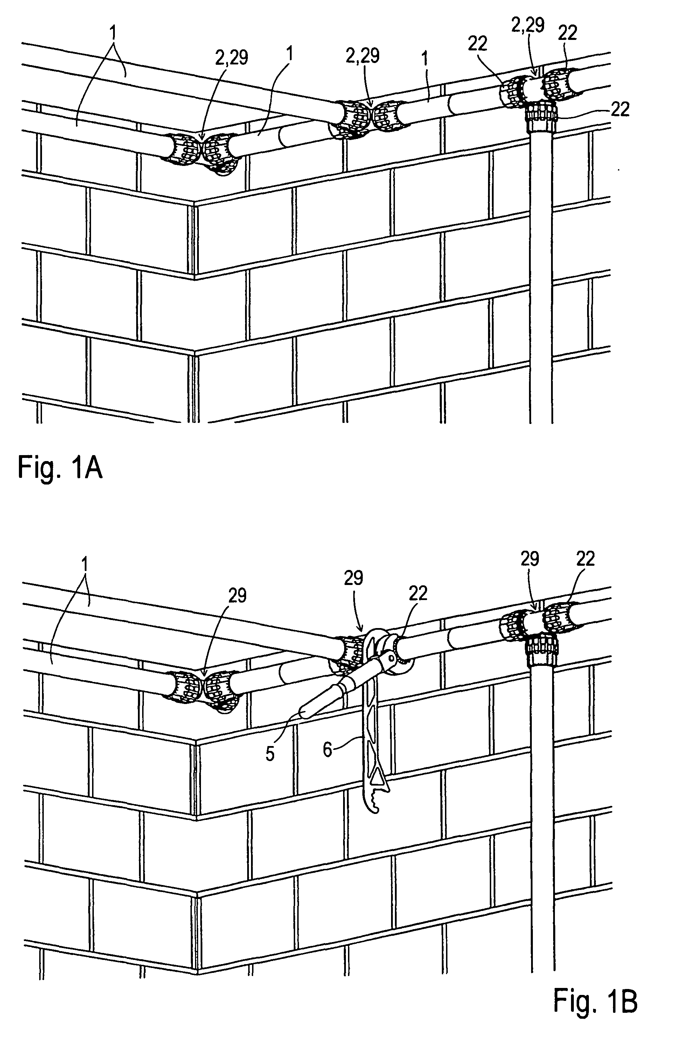

- Figur 1A -: eine Rohrleitungsverzweigung mit drei eingesetzten Fittings als T-Stücke in einem Gebäude;
- Figur 1B -: die Darstellung gemäss Figur 1A mit an einer Rohrverbindung angesetztem Drehmomenten-Ratschenschlüssel und Gegenhalteschlüssel;

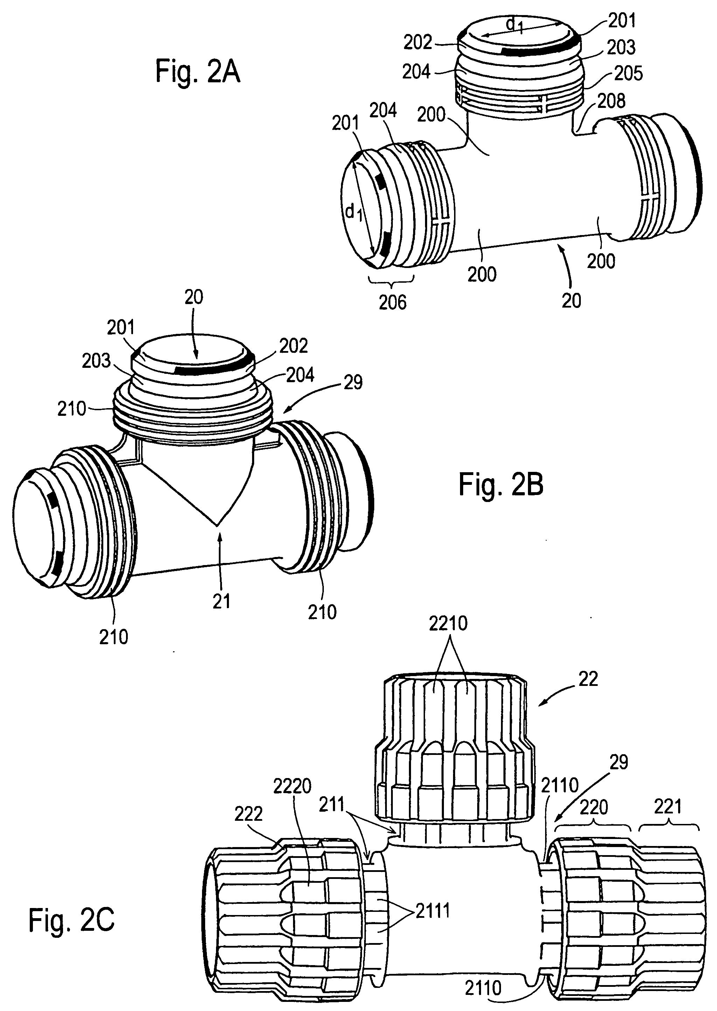

- Figur 2A -: einen Innenkörper für einen Fitting in Form eines T-Stücks;
- Figur 2B -: einen Fitting als T-Stück mit dem Innenkörper gemäss Figur 2A und den Innenkörper umgebenden Aussenkörper;
- Figur 2C -: das T-Stück gemäss Figur 2B mit aufgeschraubten Überwurfmuttern;

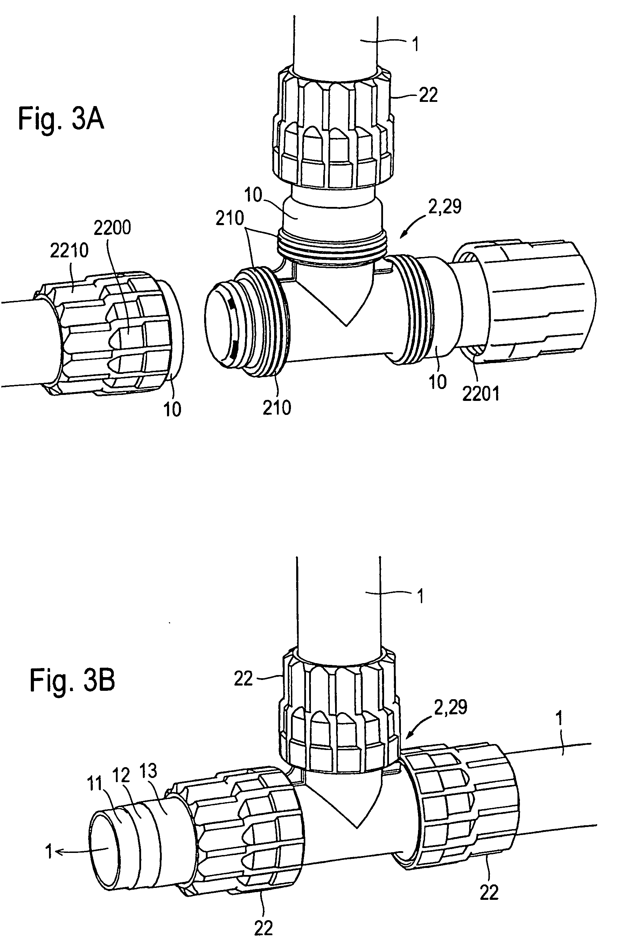

- Figur 3A -: das T-Stück gemäss Figur 2B mit drei angenäherten Rohrenden;
- Figur 3B -: die Darstellung gemäss Figur 3A mit verschraubten Rohrenden;
- Figur 3C -: im Prinzip die Darstellung gemäss Figur 3B im Teilschnitt ;
- Figur 4A -: einen Fitting als gerade Muffe mit aufgeschraubten Überwurfmuttern;
- Figur 4B -: einen Fitting als 90°-Bogen mit aufgeschraubten Überwurfmuttern;
- Figur 4C -: einen Fitting als 45°-Bogen mit aufgeschraubten Überwurfmuttern;
- Figur 4D -: einen 360°-Bogen zur Kompensation der Längenausdehnung mit aufgesteckten Überwurfmuttern; und
- Figur 5 -: eine Rohrverbindung mit einem T-Stück, einer Fixpunktschelle und einer Reduktionsmuffe im Schnitt.

### Ausführungsbeispiele

Mit Bezug auf die beiliegenden Zeichnungen erfolgt nachstehend die detaillierte Beschreibung von Ausführungsbeispielen zur erfindungsgemässen Rohrverbindung.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figur 1A

In einem Raum verläuft ein Rohrleitungsnetz, dies könnte z.B. Bestandteil der Kalt- oder Warmwasserversorgung bzw. der Heizungsanlage eines Gebäudes sein. Das Rohrleitungsnetz ist typischerweise verzweigt und besitzt als solches Bögen, Abzweigungen und Reduktionen. Der hier gezeigte Ausschnitt weist mehrere Rohrabschnitte **1** auf, die auf Fittings **2** zulaufen oder von dort abgehen. Im hiesigen Beispiel haben die Fittings **2** die Gestalt von T-Stücken **29**, wobei sich die jeweils drei Anschlüsse des linken und des in der Mitte positionierten T-Stücks **29** in der Horizontalebene erstrecken, während der mittige Anschluss des rechten T-Stücks **29** senkrecht nach unten weist. Je mit drei Überwurfmuttern **22** sind die drei an einem T-Stück **29** ansetzenden Rohrenden **10** angeschlossen und bilden verschraubbare Rohrverbindungen. Vorerst wird die erfindungsgemässe Rohrverbindung weiter anhand eines T-Stücks **29** beschrieben.

### Figur 1B

Beim Herstellen oder Lösen der Rohrverbindungen benutzt man einen Drehmomenten-Ratschenschlüssel **5** und einen Gegenhalteschlüssel **6**; siehe die spätere Beschreibung zu den Figurenfolgen 7A bis 7F und 8A bis 8C. Mit dem Drehmomenten-Ratschenschlüssel **5** wird die Überwurfmutter **22** angezogen bzw. gelöst. Zugleich hat man am Anschluss des T-Stücks **29** den Gegenhalteschlüssel **6** angesetzt, um mit dem vom Drehmomenten-Ratschenschlüssel **5** ausgeübten Drehmoment nicht den jeweiligen Ausschnitt des Rohrleitungsnetzes zu belasten, sondern das Drehmoment nur für die Herstellung oder das Lösen der Verschraubung zwischen der Überwurfmutter **22** und dem Anschluss am T-Stück **29** zu nutzen.

### Figur 2A

Das hohle Innenteil **20** des T-Stücks **29** hat ebenfalls eine T-förmige Gestalt mit drei Ästen **200** und besteht aus einem heisswasserbeständigen sowie für Trinkwasser zulässigen Kunststoff. Die drei Äste **200** besitzen hier die lichte Weite **d**₁ als kreisrunde Strömungsdurchgänge gleicher Dimension. Das freie Ende jedes Astes **200** hat zuvorderst eine konische Mündungsfläche **201**, die sich vom Innenteil **20** weg verjüngt. Hinter der Mündungsfläche **201** liegt eine erste im wesentlichen zylindrische Ringfläche **202,** an die sich eine Radialnut **203** zur Aufnahme eines Dichtungselements anschliesst. Der Radialnut **203** folgt eine zweite Ringfläche **204**, die in eine Rillenpartie **205** übergeht, welche kunststofftechnisch vorteilhaft ist. Die zweite Ringfläche **204** erweitert sich geringfügig konisch hin zur Rillenpartie **205**. Der Bereich von der Mündungsfläche **201** bis an die Rillenpartie **205** heran wird als Anschlusspartie **206** bezeichnet.

Der vertikale Ast **200** setzt an die beiden seitlich abgehenden horizontalen Äste **200** vorteilhaft mit Rundungen **208** an. Diese Rundungen **208** am Innenteil **20**, welches quasi eine verlorene Schalung darstellt, ermöglichen, dass am aufgebrachten Aussenteil **21** auch in den Eckbereichen eine gleichmässige Wandstärke hergestellbar ist und damit kunststofftechnisch Spannungskonzentrationen optimal vermieden werden können.

### Figuren 2B und 2C

Das Innenteil **20** ist weitgehend von einem Aussenteil **21** umschlossen, wobei Innen- und Aussenteil **20,21** zusammen das T-Stück **29** ergeben. Aus dem Aussenteil **21** ragen vom Innenteil **20** von jedem Ast **200** nur die Anschlusspartie **206** heraus. Das übrige Innenteil **20** ist vom Aussenteil **21** umgeben, wobei letzteres aus einem Kunststoff höherer Festigkeit besteht, der aber nicht mit dem durchströmenden Medium in Kontakt kommt. Für die Innen- und Aussenteile **20,21** werden unterschiedliche Kunststoffe mit den jeweils geforderten Eigenschaften verwendet. Die drei Äste des Aussenteils **21** enden, die Rillenpartien **205** des Innenteils **20** umfassend, mit einem Aussengewindeabschnitt **210**, vorzugsweise wird man dafür ein kunststoffgerechtes Sägengewinde verwenden. Hinter dem Aussengewindeabschnitt **210** liegt vorteilhaft ein Schlüsselabschnitt **211** für den Eingriff des Gegenhalteschlüssels **6**. Der Schlüsselabschnitt **211** weist zwei zueinander im wesentlichen parallel liegende Auflageflächen **2110** und systematisch angeordnete Eingriffsmulden **2111** auf. Die Eingriffsmulden **2111** verteilen sich auf den zwischen den Auflageflächen **2110** verbleibenden oberen und unteren Kreisbögen.

Die Überwurfmutter **22** lässt sich auf den Aussengewindeabschnitt **210** des Aussenteils **21** bis an den Schlüsselabschnitt **211** heran aufschrauben und besitzt daher an ihrer vorderen Gewindepartie **220** einen komplementären Innengewindeabschnitt. An die Gewindepartie **220** schliesst sich eine nach hinten erstreckende Führungspartie **221** zur Aufnahme des unverformten Rohrs **1** an, welches hinter dem aufgeweiteten Rohrende liegt. Die Führungspartie **221** hat daher einen kleineren Innendurchmesser als die Gewindepartie **220**, wobei auch der Aussendurchmesser der Führungspartie **221** gegenüber dem Aussendurchmesser der Gewindepartie **220** vermindert ist. Der Übergang zwischen beiden Partien **220,221** wird äusserlich von einem Konusabsatz **222** und innerlich von einer radialen Konusschulter gebildet. An der Führungspartie **221** sind äussere systematisch verteilte, axial verlaufende Schlüsselrillen **2210** vorhanden, die dem Eingriff des Drehmomenten-Ratschenschlüssels **5** dienen. Diese Schlüsselrillen **2210** setzen sich vorteilhaft als Griffrillen **2200** auf der Gewindepartie **220** fort. Durch die Griffrillen **2200** lässt sich die Überwurfmutter **22** bei Andrehen auf den Aussengewindeabschnitt **210** oder beim restlichen Lösen von Hand fester fassen.

### Figuren 3A bis 3C

Zum Herstellen der Rohrverbindung zwischen dem Rohr **1** und dem Fitting **2** - z.B. weiterhin ein T-Stück **29** - wird das zum Anschliessen bestimmte Rohr **1** am Ende mit einem aufgeweiteten Anschlussabschnitt **10** versehen. Dieser Anschlussabschnitt **10** hat eine solche Innenkontur, dass er sich auf die Anschlusspartie **206** mit der Mündungsfläche **201**, den Ringflächen **202,204** und der dazwischen liegenden Radialnut **203** dichtend aufschieben lässt. Die Aussenkontur der Anschlusspartie **206** ist der Innengeometrie der Gewindepartie **220** der Überwurfmutter **22** angepasst, so dass für das Aufschrauben der Überwurfmutter **22** auf den Aussengewindeabschnitt **210** des Fittings **2** der Innengewindeabschnitt **2201** frei ist und der Anschlussabschnitt **10** von der internen Konusschulter **2220** in der Überwurfmutter **22** hintergriffen wird. Im fest verschraubten Zustand - der Innengewindeabschnitt **2201** der Überwurfmutter **22** ist mit dem Aussengewindeabschnitt **210** des Fittings **2** in maximalem Eingriff - drückt die Konusschulter **2220** auf den Anschlussabschnitt **10** und hält ihn hierdurch auf der Anschlusspartie **206**. Die Konusschulter **2220** ist mit radial umlaufenden Rillen versehen, welche bewirken, dass die Aussenbeschichtung **13** unter dem Druck der Verschraubung nicht wegfliessen kann. Zugleich erhöhen diese Rillen die Auszugsfestigkeit des Rohrs **1** aus der Verschraubung.

Als Verbundrohr hat das Rohr **1** typischerweise eine Innenbeschichtung **11** aus Kunststoff, eine darauf liegende Mittelschicht **12** - zumeist aus Aluminium - und eine Aussenbeschichtung **13** wiederum aus Kunststoff. Die Innenbeschichtung **11** wirkt im Bereich des Anschlussabschnitts **10** gegen die Anschlusspartie **206** des Fittings **2** als Dichtung. Die Innen- und die Aussenbeschichtung **11,13** bestehen vorzugsweise aus vernetztem Polyäthylen. Mit einem in die Radialnut **203** eingelegten Dichtungselement **207** lässt sich die Sicherheit bei der Abdichtung weiter erhöhen. Zum Herstellen der verschraubten Rohrverbindung und zum eventuellen späteren Lösen bleibt der Schlüsselabschnitt **211** am Fitting **2** zum Ansetzen des Gegenhalteschlüssels zugänglich.

### Figuren 4A bis 4C

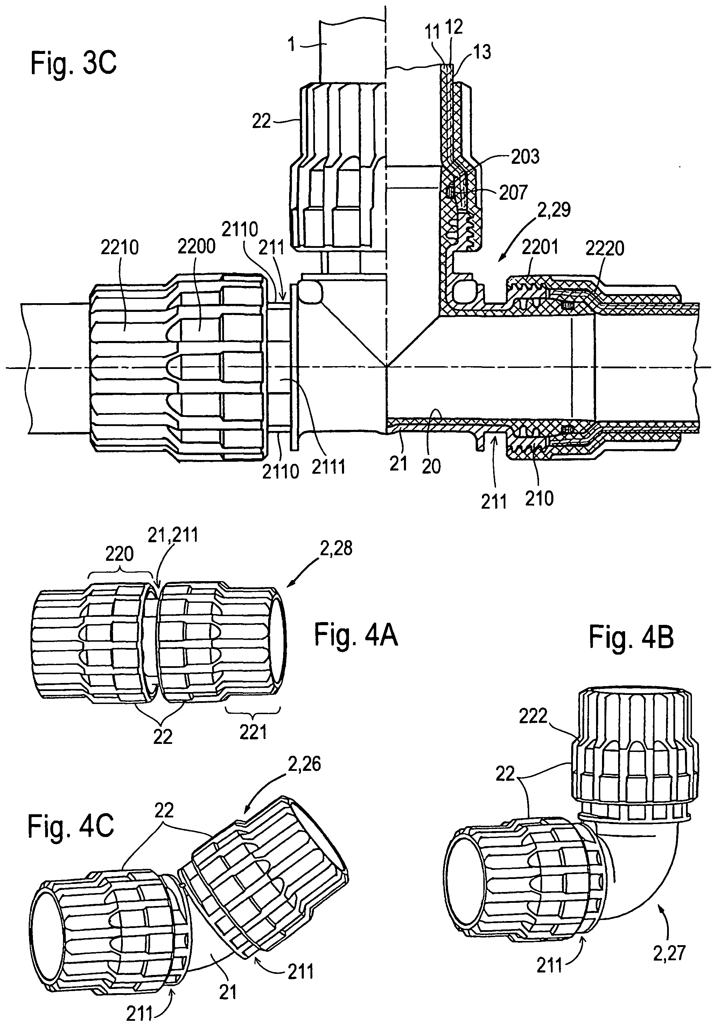

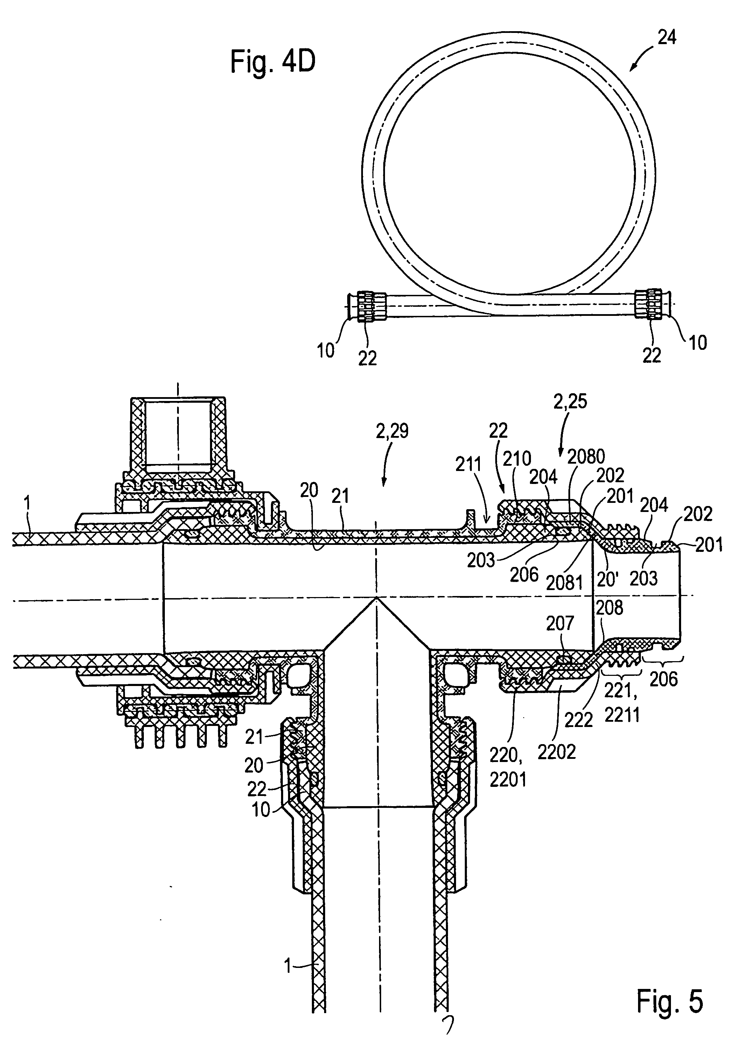

Für andere Varianten der Rohrverbindung stehen als Fittings **2** neben dem T-Stück **29** eine gerade Muffe **28** (s. Figur 4A), ein 90°-Bogen **27** (s. Figur 4B) und ein 45°-Bogen **26** (s. Figur 4C) zur Verfügung, die nach dem gleichen Prinzip wie das T-Stück **29** aufgebaut sind. Auch diese Fittings **2** besitzen jeweils ein Innenteil **20** (verdeckt) und ein Aussenteil **21**, wobei vom Innenteil **20** die Anschlusspartien **206** zum Aufschieben der aufgeweiteten Anschlussabschnitte **10** innerlich frei sind. Auf die Aussengewindeabschnitte **210** der Fittings **2** sind Überwurfmuttern **22** aufgeschraubt, und in gleicher Weise vorhandene Schlüsselabschnitte **211** erlauben den Eingriff mit einem Gegenhalteschlüssel. Nach diesem Konstruktionsprinzip lassen sich auch Bögen mit anderen Abwinkelungen, z.B. 30° und 60°, 180°-Krümmer, 45°-T-Stücke, Kreuzstücke oder Reduktionsmuffen (zu letzten s. Figur 5D) herstellen.

### Figur 4D

Zum System zugehörig ist ein 360°-Bogen **24**, welcher zur Kompensation von Längenänderungen bei Wärmedehnung im Rohrleitungsnetz dient. Der 360°-Bogen **24** besteht aus einem in einer Schleife geführten Rohr **1**, dessen beide Anschlussabschnitte **10** wie vorbeschrieben aufgeweitet sind. Vor dem Aufweiten wurden zwei Überwurfmuttern **22** auf das Rohr **1** aufgeschoben, die zum Verschrauben mit den benachbarten Fittings **2** dienen.

### Figur 5

Ein zusätzlicher sehr praktischer Vorteil der erfindungsgemässen Rohrverbindung liegt darin, dass direkt an einen ersten Fitting **2** - hier ein T-Stück **29** - ein zweiter Fitting **2**, hier eine Reduktionsmuffe **25**, anmontiert werden kann. Aus dem T-Stück **29 -** präziser gesagt aus dessen Aussenteil **21 -** ragt die Anschlusspartie **206** des Innenteils **20** mit der Mündungsfläche **201,** den beiden Ringflächen **202,204** und der dazwischen liegenden Radialnut **203** heraus. Zum Anschluss steht der Aussengewindeabschnitt **210** und der Schlüsselabschnitt **211** des Aussenteils **21** des ersten Fittings **2** zur Verfügung.

Die Reduktionsmuffe **25** als zweiter Fitting **2** besteht aus einem speziell geformten Innenteil **20** und einer speziellen Überwurfmutter **22**, welche das Aussenteil der Reduktionsmuffe **25** darstellt. Das Innenteil **20** und die Überwurfmutter **22** können als ineinander steckbare Einzelteile oder als Verbund - z.B. im Zweikomponenten-Spritzverfahren hergestellt - vorliegen. Das Innenteil **20** besitzt, ähnlich dem aufgeweiteten Anschlussabschnitt **10** eines Rohrs **1**, einen aufgeweiteten Anschlussabschnitt **208**, der zum Aufschieben auf die Anschlusspartie **206** des ersten Fittings **29** vorgesehen ist. Gegenüber dem Anschlussabschnitt **208** endet das Innenteil **20** mit einer Anschlusspartie **206** gleicher Kontur wie die Anschlusspartie **206** des ersten Fittings **29**, jedoch mit reduziertem Durchmesser. Der Anschlussabschnitt **208** endet mit einem zylindrischen Sektor **2080** dem ein Konussektor **2081** vorgelagert ist, der sich zur Anschlusspartie **206** der Reduktionsmuffe **25** hin verengt. Die Überwurfmutter **22** besitzt wiederum die Gewindepartie **220**, einen sich daran anschliessenden Konusabsatz **222** - letzterer bildet die interne Konusschulter **2220** - und die Führungspartie **221**. Die Gewindepartie **220** weist den Innengewindeabschnitt **2201** und einen im Innendurchmesser verengten Schlüsselrillenabschnitt **2202** auf. Aus der Führungspartie **221** ragt die Anschlusspartie **206** mit der konischen Mündungsfläche **201**, den Ringflächen **202,204** und der dazwischen liegenden Radialnut **203** heraus. In die Radialnut **203** ist ein Dichtungselement **207** einsetzbar. Die Führungspartie **221** ist äusserlich mit dem Aussengewindeabschnitt **2211** umgeben.

Im montierten Zustand liegt der Schlüsselrillenabschnitt **2202** auf dem zylindrischen Sektor **2080** auf, die Konusschulter **2220** hintergreift den Konussektor **2081** und der Aussengewindeabschnitt **2211** liegt auf dem der Anschlusspartie **206** vorgelagerten Bereich des Innenteils **20**. Die Gewindepartie **220** des zweiten Fittings **25** ist mit dem Aussengewindeabschnitt **210** des ersten Fittings **29** im Eingriff. An den Schlüsselrillenabschnitt **2202** lässt sich der Drehmomenten-Ratschenschlüssel **5** ansetzen, und der Schlüsselabschnitt **211** dient zum Eingriff mit dem Gegenhalteschlüssel **6**. Der Aussengewindeabschnitt **2211** sowie die daraus herausragende Anschlusspartie **206** der Reduktionsmuffe **25** stehen für die Verbindung mit der nächsten Überwurfmutter **22** entsprechend verringerter Dimension und dem Anschlussabschnitt **10** eines im Durchmesser reduzierten Rohrs **1** zur Verfügung.

## Patentansprüche

1. Verschraubbare Rohrverbindung, insbesondere für Verbundrohre, wobei ein aus einem Rohr **(1)** ausgeformter, radial aufgeweiteter Anschlussabschnitt **(10)** mittels einer Überwurfmutter **(22)** dichtend mit einem Fitting (**2**) verschraubt ist, **dadurch gekennzeichnet, dass**
a) der Fitting (**2**) aus einem durchgehenden mediumführenden Innenteil (**20**) mit mindestens einer Anschlusspartie **(206)** und einem das Innenteil **(20)** bis an die Anschlusspartie **(206)** ummantelnden Aussenteil **(21)** mit mindestens einem Aussengewindeabschnitt (**210**) besteht;
b) Innenteil (**20**) und Aussenteil (**21**) vorzugsweise aus unterschiedlichen Materialien beschaffen sind;
c) der Anschlussabschnitt (**10**) des Rohrs (**1**) an die Anschlusspartie (**206**) des Fittings (**2**) angeschlossen ist; und
d) eine Überwurfmutter (**22**) den Anschlussabschnitt (**10**) hintergreift und zur Verschraubung mit dem Aussengewindeabschnitt (**210**) am Aussenteil (**21**) vorgesehen ist.

2. Rohrverbindung nach Anspruch 1, **dadurch gekennzeichnet, dass**
a) der Anschlussabschnitt (**10**) auf die Anschlusspartie (**206**) aufgeschoben ist; und
b) das Aussenteil (**21**) das Innenteil (**20**) insoweit vollständig umschliesst, dass allein die Anschlusspartien (**206**) zugänglich bleiben.

3. Rohrverbindung nach Anspruch 1 oder 2, **dadurch gekennzeichnet, dass**
a) das Aussenteil (**21**) und das Innenteil (**20**) aus verschiedenen Kunststoffen bestehen; und
b) das Aussenteil (**21**) auf das Innenteil **(20)** im Zweikomponenten-Spritzverfahren aufgegossen ist, wodurch beide Teile **(20,21)** eine Einheit bilden.

4. Rohrverbindung nach einem der Ansprüche 1 bis 3, **dadurch gekennzeichnet, dass** benachbart zu jedem Aussengewindeabschnitt (**210**) am Aussenteil (**21**) ein den Fitting (**2**) radial umlaufender Schlüsselabschnitt (**211**) für den Eingriff eines Werkzeugschlüssels (**6**) vorgesehen ist.

5. Rohrverbindung nach Anspruch 4, **dadurch gekennzeichnet, dass** der Schlüsselabschnitt **(211)**
a) aus ebenen Auflageflächen (**2110**) und Eingriffsmulden (**2111**) besteht; und
b) sowohl zum Aussengewindeabschnitt (**210**) hin als auch in die entgegengesetzte Richtung seitlich begrenzt ist.

6. Rohrverbindung nach Anspruch 1, **dadurch gekennzeichnet, dass**
a) die Überwurfmutter (**22**) aus einer vorderen Gewindepartie (**220**) und einer hinteren Führungspartie (**221**) besteht;
b) die Gewindepartie (**220**) den aufgeweiteten Anschlussabschnitt (**10**) aufnimmt und innerlich einen Innengewindeabschnitt (**2201**) aufweist, welcher zum Aussengewindeabschnitt (**210**) am Aussenteil (**21**) komplementär ist;
c) die Führungspartie (**221**) zur Durchführung des dem Anschlussabschnitt (**10**) folgenden Rohrs (**1**) dient;
d) am Übergang zwischen der Gewindepartie (**220**) und der Führungspartie (**221**) eine innerliche Konusschulter (**2220**) zum Hinterfassen des aufgeweiteten Anschlussabschnitts (**10**) angeordnet ist; und
e) am Aussenumfang der Überwurfmutter (**22**) querverlaufende Schlüsselrillen (**2210**) zum Eingriff eines Schraubwerkzeugs (**5**) vorhanden sind.

7. Rohrverbindung nach Anspruch 1 oder 2, **dadurch gekennzeichnet, dass** die Anschlusspartie (**206**) sich zusammensetzt aus:
a) einer konischen Mündungsfläche (**201**) als Ende des Innenteils (**20**);
b) einer an die Mündungsfläche (**201**) anschliessenden ersten Ringfläche (**202**); und
c) einer hinter der ersten Ringfläche (**202**) liegenden zweiten Ringfläche (**204**), welche vorzugsweise konisch ist; wobei
d) zwischen der ersten und der zweiten Ringfläche (**202,204**) eine Radialnut **(203)** zur Aufnahme eines Dichtungselements (**207**) liegen kann.

8. Rohrverbindung nach einem der Ansprüche 1 bis 7, **dadurch gekennzeichnet, dass**
a) zum Anschluss an zwei benachbarte Fittings (**2**) zwecks Kompensation von Wärmedehnung ein im Bogen oder Vollkreis geführtes Rohr (**24**) dient; und
b) die beiden Rohrenden jeweils mit einem aufgeweiteten Anschlussabschnitt (**10**) und einer zuvor aufgebrachten Überwurfmutter (**22**) versehen sind.

9. Formstück **(25)** für eine Rohrverbindung nach einem der Ansprüche 1 bis 7, **dadurch gekennzeichnet, dass**
a) das Formstück **(25)** aus einer Überwurfmutter **(22)** und einem Innenteil **(2d)** besteht;
b) das Innenteil (**20**) einen aufgeweiteten Anschlussabschnitt (**208**) und die Anschlusspartie (**206**) hat;
c) die Überwurfmutter (**22**) an einem Ende die Gewindepartie (**220**) mit dem Innengewindeabschnitt (**2201**) und am anderen Ende die Führungspartie (**221**) sowie einen dazwischen liegenden Konusabsatz (**222**) aufweist;
d) der Anschlussabschnitt (**208**) innerhalb der Überwurfmutter (**22**) liegt und vom Konusabsatz (**222**) hintergriffen wird;
e) die Anschlusspartie (**206**) des Innenteils (**20**) aus der Führungspartie (**221**) der Überwurfmutter (**22**) herausragt;
f) an der Führungspartie (**221**) ein Aussengewindeabschnitt (**2211**) vorhanden ist; und
g) bestimmt sind:
ga) der Anschlussabschnitt (**208**) zum Ansetzen an die Anschlusspartie (**206**) eines ersten Fittings (**2**);
gb) der Innengewindeabschnitt (**2201**) zum Verschrauben mit dem Aussengewindeabschnitt (**210**) des ersten Fittings (**2**);
gc) die Anschlusspartie (**206**) des Formstücks (**25**) zum Ansetzen des Anschlussabschnitts (**10**) eines Rohrs (**1**); und
gd) der Aussengewindeabschnitt (**2211**) der Überwurfmutter (**22**) des Formstücks (**25**) zum Verschrauben mit einer auf dem Rohr (**1**) steckenden und den Anschlussabschnitt (**10**) hintergreifenden Überwurfmutter.

10. Formstück nach Anspruch 9, **dadurch gekennzeichnet, dass**
a) das Innenteil (**20**) in die Überwurfmutter (**22**) einsteckbar ist; oder
b) die Überwurfmutter **(22)** auf das Innenteil (**20**) im Zweikomponenten-Spritzverfahren aufgegossen ist, wodurch beide Teile (**20,22**) eine miteinander fest verbundene Einheit bilden; und
c) das Formstück als Reduktionsmuffe (**25**) ausgebildet ist; oder
d) das Formstück als Bogen ausgebildet ist, wobei das Innenteil (**20**) vor dem Verschrauben der Überwurfmutter (**22**) in die gewünschte Position drehbar ist.

## Claims

1. Threaded pipe coupling, in particular for composite pipes, a radially widened connection section **(10)** formed from a pipe **(1)** being screwed to a fitting **(2)** in a sealing manner by means of a cap nut **(22),** **characterised in that**
a) the fitting **(2)** consists of a continuous, medium-carrying inner part **(20)** having at least one connection portion **(206)** and of an outer part **(21)** encasing the inner part **(20)** up to the connection portion **(206)** and having at least one external-thread section (**210**);
b) the inner part **(20)** and the outer part **(21)** are preferably made of different materials;
c) the connection section **(10)** of the pipe **(1)** is connected to the connection portion **(206)** of the fitting **(2)**; and
d) a cap nut **(22)** engages behind the connection section **(10)** and is intended for screwing to the external-thread section **(210)** on the outer part (**21**).

2. Pipe coupling according to Claim 1, **characterised in that**
a) the connection section **(10)** is pushed onto the connection portion **(206);** and
b) the outer part **(21)** completely encloses the inner part **(20)** to the extent that only the connection portions **(206)** remain accessible.

3. Pipe coupling according to Claim 1 or 2, **characterised in that**
a) the outer part **(21)** and the inner part **(20)** are made of different plastics; and
b) the outer part **(21)** is cast onto the inner part **(20)** by a two-component injection moulding process, as a result of which both parts **(20,21)** form a unit.

4. Pipe coupling according to one of Claims 1 to 3, **characterised in that** a wrench section **(211)** running radially around the fitting **(2)** and intended for the engagement of a tool wrench **(6)** is provided adjacent to each external-thread section **(210)** on the outer part **(21)**.

5. Pipe coupling according to Claim 4, **characterised in that** the wrench section **(211)**
a) consists of flat bearing surfaces **(2110)** and engagement hollows **(2111);** and
b) is defined laterally both towards the external-thread section **(210)** and in the opposite direction.

6. Pipe coupling according to Claim 1, **characterised in that**
a) the cap nut **(22)** consists of a front threaded portion **(220)** and a rear guide portion **(221)**;
b) the threaded portion **(220)** accommodates the widened connection section **(10)** and internally has an internal-thread section **(2201)** which is complementary to the external-thread section **(210)** on the outer part **(21)**;
c) the guide portion **(221)** serves to pass through the pipe **(1)** following the connection section **(10)**;
d) an internal taper shoulder **(2220)** for gripping behind the widened connection section **(10)** is arranged at the transition between the threaded portion **(220)** and the guide portion **(221)**; and
e) there are transversely running wrench channels **(2210)** on the outer circumference of the cap nut **(22)** for the engagement of a wrench **(5).**

7. Pipe coupling according to Claim 1 or 2, **characterised in that** the connection portion **(206)** is composed of:
a) a tapered orifice surface **(201)** as the end of the inner part **(20);**
b) a first annular surface **(202)** adjoining the orifice surface **(201);** and
c) a second annular surface **(204)** which lies behind the first annular surface (202) and is preferably tapered; in which case
d) a radial groove **(203)** for accommodating a sealing element **(207)** can lie between the first and the second annular surfaces **(202,204).**

8. Pipe coupling according to one of Claims 1 to 7, **characterised in that**
a) a pipe **(24)** guided in a curve or full circle serves for connecting to two adjacent fittings **(2)** for the purpose of compensating for thermal expansion; and
b) the two pipe ends are each provided with a widened connection section **(10)** and a cap nut **(22)** put on beforehand.

9. Shaped piece **(25)** for a pipe coupling according to one of Claims 1 to 7, **characterised in that**
a) the shaped piece **(25)** consists of a cap nut **(22)** and an inner part **(20');**
b) the inner part **(20')** has a widened connection section **(208)** and the connection portion **(206)**;
c) the cap nut **(22)** has, at one end, the threaded portion **(220)** with the internal-thread section **(2201)** and, at the other end, the guide portion **(221)** and a taper step **(222)** lying in between;
d) the connection section **(208)** lies inside the cap nut **(22)** and the taper step **(222)** engages behind it;
e) the connection portion **(206)** of the inner part **(20')** projects beyond the guide portion **(221)** of the cap nut **(22);**
f) there is an external-thread section **(2211)** on the guide portion **(221);** and
g) the intention is
ga) for the connection section **(208)** to be attached to the connection portion **(206)** of a first fitting **(2)**;
gb) for the internal-thread section **(2201)** to be screwed to the external-thread section **(210)** of the first fitting **(2);**
gc) for the connection portion **(206)** of the shaped piece **(25)** to be attached to the connection section **(10)** of a pipe **(1)**; and
gd) for the external-thread section **(2211)** of the cap nut **(22)** of the shaped piece **(25)** to be screwed to a cap nut which is on the pipe **(1)** and engages behind the connection section **(10).**

10. Shaped piece according to Claim 9, **characterised in that**
a) the inner part **(20')** can be inserted into the cap nut **(22);** or
b) the cap nut **(22)** is cast onto the inner part **(20')** by a two-component injection moulding process, as a result of which both parts **(20',22)** form a unit connected to one another; and
c) the shaped piece is designed as a reduction socket **(25)**; or
d) the shaped piece is designed as an elbow, it being possible for the inner part **(20')** to be rotated into the desired position before the cap nut **(22)** is screwed up.

## Revendications

1. Joint fileté pour tuyaux, en particulier pour tuyaux composites, tandis qu'un segment de raccordement **(10)** formé par évasement radial à partir d'un tube **(1)** est vissé sur une robinetterie **(2)** de manière étanche à l'aide d'un écrou-raccord **(22),** **caractérisé en ce que**
a) la robinetterie **(2)** se compose d'une partie intérieure **(20)** continue, conduisant le flux, ayant moins une partie de jonction **(206)** et d'une partie extérieure **(21)** ayant au moins une partie filetée extérieure **(210)** et qui enveloppe la partie intérieure **(20)** jusqu'à la partie de jonction **(206);**
b) la partie intérieure **(20)** et la partie extérieure **(21)** consistent de préférence en des matériaux différents;
c) le segment de raccordement **(10)** du tube **(1)** est raccordé à la partie de jonction **(206)** de la robinetterie **(2);** et que
d) un écrou-raccord **(22)** vient s'engager par l'arrière sur le segment de raccordement **(10)** et est prévu pour se visser sur le segment fileté extérieur **(210)** de la partie extérieure **(21).**

2. Joint fileté pour tuyaux selon revendication 1, **caractérisé en ce que**
a) le segment de raccordement **(10)** est glissé par-dessus la partie de jonction **(206);** et que
b) la partie extérieure **(21)** enveloppe quasiment la partie intérieure **(20)** de sorte que seules les parties de jonction **(206)** restent accessibles.

3. Joint fileté pour tuyaux selon revendication 1 ou 2, **caractérisé en ce que**
a) la partie extérieure **(21)** et la partie intérieure **(20)** consistent en des matières plastiques différentes; et que
b) la partie extérieure **(21)** est moulée par injection de deux composants par-dessus la partie intérieure **(20),** tandis que les deux parties **(20,21)** forment une entité.

4. Joint fileté pour tuyaux selon l'une des revendications 1 à 3, **caractérisé en ce que**, près de chaque segment fileté extérieur **(210)** de la partie extérieure **(21)** est prévu un anneau de clef **(211)** entourant radialement la robinetterie **(2)** pour permettre la prise d'une clef de plombier **(6).**

5. Joint fileté pour tuyaux selon revendication 4, **caractérisé en ce que**, l'anneau de clef **(211)**
a) des surfaces planes d'appui **(2110)** et des creux de préhension **(2111);** et
b) qu'il est latéralement limité, aussi bien vers le segment fileté extérieur **(210)** que vers le sens opposé.

6. Joint fileté pour tuyaux selon revendication 1, **caractérisé en ce que**,
a) l'écrou-raccord **(22)** comporte une partie filetée **(220)** avant et une partie de guidage **(221)** arrière; que
b) la partie filetée **(220)** reçoit le segment de raccordement **(10)** évasé et qu'elle présente, à l'intérieur, un segment fileté intérieur **(2201),** complémentaire du segment fileté extérieur **(210)** de la partie extérieure **(21);** que
c) la partie de guidage **(221)** sert à guider le tube **(1)** qui suit le segment de raccordement **(10);**
d) qu'un épaulement conique **(2220)** intérieur est disposé entre la partie filetée **(220)** et la partie de guidage **(221)** pour contre-épauler le segment de raccordement **(10)** évasé; et que
e) des cannelures à clef **(2210)** transversales existent sur le pourtour extérieur de l'écrou-raccord **(22)** pour permettre la préhension d'une clef à visser **(5).**

7. Joint fileté pour tuyaux selon revendication 1 ou 2, **caractérisé en ce que** la partie de raccordement **(206)** comporte
a) une surface de jonction conique **(201)** en extrémité de la partie intérieure **(20);**
b) une première surface annulaire **(202)** jouxtant l'arrière de la surface de jonction **(201);**
c) une deuxième surface annulaire **(204),** de préférence conique, jouxtant l'arrière de la première surface annulaire **(202),** tandis que
d) entre la première et la deuxième surface annulaire **(202,204),** peut se trouver une rainure radiale **(203)** destinée à recevoir un élément d'étanchéité **(207).**

8. Joint fileté pour tuyaux selon l'une des revendications 1 à 7,
**caractérisé en ce que**
a) pour effectuer le raccordement entre deux robinetteries **(2)** voisines, un tuyau **(24)** est formé en coude ou en cercle complet pour compenser la dilation thermique; et que
b) les deux extrémités du tuyau sont chacune pourvues d'un segment de raccordement **(10)** évasé et d'un écrou-raccord **(22)** préalablement installé.

9. Raccord de tuyauterie **(25)** pour un joint fileté pour tuyaux selon l'une des revendications 1 à 7, **caractérisé en ce que**
a) le raccord de tuyauterie **(25)** se compose d'un écrou-raccord **(22)** et d'une partie intérieure **(20');**
b) la partie intérieure **(20')** comporte un segment de raccordement **(208)** évasé et la partie de jonction **(206);**
c) L'écrou-raccord **(22)** présente à une extrémité la partie filetée **(220)** avec le segment fileté intérieur **(2201)** et, à l'autre extrémité, la partie de guidage **(221),** ainsi qu'un épaulement conique **(222)** intermédiaire.
d) le segment de raccordement **(208)** se trouve à l'intérieur de l'écrou-raccord **(22)** et est contre-épaulé par l'épaulement conique **(222);**
e) la partie de jonction **(206)** de la partie intérieure **(20')** dépasse au-delà de la partie de guidage **(221)** de l'écrou-raccord **(22);**
f) la partie de guidage **(221)** comporte un segment fileté extérieur **(2211);** et
g) qu'il est prévu que:
ga) le segment de raccordement **(208)** soit rabouté à la partie de jonction **(206)** d'une première robinetterie **(2);**
gb) le segment fileté intérieur **(2201)** se visse avec le segment fileté extérieur **(210)** de la première robinetterie **(2);**
gc) la partie de jonction **(206)** du raccord de tuyauterie **(25)** serve au rajout du segment de raccordement **(10)** d'un tube **(1);** et
gd) le segment fileté extérieur **(2211)** de l'écrou-raccord **(22)** du raccord de tuyauterie **(25)** soit vissé avec un écrou-raccord fixé sur le tube **(1)** et qui contre-épaule le segment de raccordement **(10).**

10. Raccord de tuyauterie selon revendication 9, **caractérisé en ce que**
a) la partie intérieure **(20')** peut s'introduire dans l'écrou-raccord **(22);** ou
b) l'écrou-raccord **(22)** est moulé par injection de deux composants par-dessus la partie intérieure **(20'),** de façon que les deux pièces **(20',22)** forment ensemble une entité composite; et
c) le raccord de tuyauterie est conçu comme manchon réducteur **(25),** ou
d) le raccord de tuyauterie est conçu comme coude, tandis que la partie intérieure **(20')** se laisse tourner dans la position désirée avant vissage de l'écrou-raccord **(22).**
